# EUROPEAN PATENT APPLICATION

(11) **EP 4 783 655 A1**
(43) Date of publication of application: **29.07.2026**
(21) Application number: 24869693.2
(22) Date of filing: 24.04.2024
(51) Int. Cl.: H04W 24/10

(54) **COMMUNICATION METHOD AND APPARATUS, AND STORAGE MEDIUM**

(30) Priority: 28.09.2023 CN 202311282871
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); ZHENG, Guozeng, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/089538
(87) International publication number: WO 2025/066124

(57) **Abstract**

Provided are a communication method and apparatus, and a storage medium. The communication method is applied to a first communication node, and comprises: instructing a second communication node to monitor or not to monitor channel state information comprised in a channel state information report.

## Description

The present disclosure claims a priority to Chinese Patent Application No. 202311282871.2, and filed on September 28, 2023, the entire content of which is incorporated into the present application by reference.

### TECHNICAL FIELD

The present disclosure relates to the technical field of communication technology, and in particular, to a communication method and apparatus, and a storage medium.

### BACKGROUND

A terminal sends channel state information to a base station, so that the base station may determine a data transmission strategy based on the channel state information, thereby improving data transmission efficiency. Currently, a base station transmits a reference signal once, a terminal receives and measures the reference signal once, to obtain channel state information and feeds back the channel state information to the base station, and then the base station updates the data transmission strategy. However, a radio channel is a time-varying channel, which may cause the data transmission strategy to fail to match the channel state during data transmission, affecting the performance of a communication system.

### SUMMARY

In an aspect, a communication method is provided, and applied to a first communication node. The communication method includes:
instructing a second communication node whether to monitor channel state information included in a channel state information report.

In another aspect, a communication method is provided, and applied to a second communication node. The communication method includes:
receiving first information sent from a first communication node, where the first information is used to instruct the second communication node to feed back a channel state information report, and the first information is further used to instruct the second communication node whether to monitor channel state information included in the channel state information report.

In yet another aspect, a communication apparatus is provided, and applied to a first communication node. The communication apparatus includes:
a sending unit, configured to instruct a second communication node whether to monitor channel state information included in a channel state information report.

In yet another aspect, a communication apparatus is provided, and applied to a second communication node. The communication apparatus includes:
a receiving unit, configured to receive first information sent from the first communication node, where the first information is used to instruct the second communication node to feed back a channel state information report, and the first information is further used to instruct the second communication node whether to monitor channel state information included in the channel state information report.

In yet another aspect, a communication apparatus is provided. The communication apparatus includes: a processor and a memory. The memory stores instructions executable by the processor; the memory has stored instructions executable by the processor; the processor is configured to execute the instructions, so that the communication apparatus implements the communication method provided according to any one of the above aspects.

In yet another aspect, a computer readable storage medium is provided. The computer readable storage medium stores computer instructions, and the computer instructions, upon being executed on a computer, enable the computer to perform the communication method provided in any one of the above aspects.

In yet another aspect, a computer program product containing computer instructions is provided, and the computer instructions, upon being executed on a computer, enable the computer to perform the communication method provided in any one of the above aspects.

### BRIEF DESCRIPTION OF THE DRAWINGS

The drawings are used to provide a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a structural schematic diagram of a communication system, according to some embodiments of the present disclosure.
FIG. 2 is a schematic flowchart of a communication method, according to some embodiments of the present disclosure.
FIG. 3 is a schematic flowchart of another communication method, according to some embodiments of the present disclosure.
FIG. 4 is a schematic flowchart of yet another communication method, according to some embodiments of the present disclosure.
FIG. 5 is a schematic flowchart of yet another communication method, according to some embodiments of the present disclosure.
FIG. 6 is a schematic flowchart of yet another communication method, according to some embodiments of the present disclosure.
FIG. 7 is a schematic diagram of components of a communication apparatus, according to some embodiments of the present disclosure.
FIG. 8 is a schematic diagram of components of another communication apparatus, according to some embodiments of the present disclosure.
FIG. 9 is a structural schematic diagram of a communication apparatus, according to some embodiments of the present disclosure.

### DETAILED DESCRIPTION

To enable those skilled in the art to better understand the technical solutions of the embodiments of the present disclosure, the technical solutions in the embodiments of the present disclosure clearly and completely will be described below, in conjunction with the drawings in the embodiments of the present disclosure. Obviously, the described embodiments are only a part of the embodiments of the present disclosure, not all of the embodiments. All other embodiments obtained based on the embodiments of the present disclosure by the ordinary skilled in the art without paying any creative effort, shall be included in the protection scope of the present disclosure.

Unless the context requires otherwise, throughout the specification and the claims, the term "comprise" and its other forms, such as the third-person singular form "comprises" and the present participle form "comprising", are to be interpreted as open and inclusive terms, i.e., meaning "including, but not limited to". In the description of the specification, the terms such as "one embodiment", "some embodiments", "exemplary embodiments", "example", "specific example", or "some examples", etc., are intended to indicate that particular features, structures, materials, or characteristics related to the embodiment or example are included in at least one embodiment or example of the present disclosure. The schematic representations of the above terms do not necessarily refer to the same embodiment or example. Furthermore, the particular features, structures, materials, or characteristics may be included in any one or more embodiments or examples in any appropriate manner.

The terms "first" and "second", and other expressions, are used for descriptive purposes only, but cannot be understood as indicating or implying relative importance or implicitly specifying the number of the indicated technical features. Thus, features defined with "first" or "second", and other expressions may explicitly or implicitly include one or more such features. In the description of the present disclosure, unless otherwise specified, "multiple/a/the plurality of" means two or more.

In the embodiments of the present disclosure, the words, such as "exemplary/exemplarily" or "for example", are used to represent an example, an illustration or an explanation. Any embodiment or design solution described with "exemplary/exemplarily" or "for example" in the embodiments of the present disclosure should not be construed as preferred or advantageous over other embodiments or design solutions. Rather, the use of the words such as "exemplary/exemplarily" or "for example", etc., is intended to present relevant concepts in a specific manner.

In addition, the use of "based on" implies openness and inclusiveness, expressing a minimal condition, because a process, step, calculation, or other action "based on" one or more conditions or values may, in practice, be based on additional conditions or beyond the values.

Currently, a process of acquiring channel state information in a communication system is that: a base station sends a reference signal; a terminal receives and measures the reference signal, determines channel state information from the base station to the terminal, and reports the channel state information to the base station; the base station, after receiving the channel state information reported by the terminal, determines a data transmission strategy according to the received channel state information, and transmits data based on the determined data transmission strategy, thereby improving efficiency of data transmission. However, a radio channel is a time-varying channel; traditionally, only when a base station transmits a reference signal once can a terminal receive and measure the reference signal once, and the terminal obtains channel state information and feeds back the channel state information to the base station. The base station uses the channel state information fed back by the terminal, to generate a data transmission strategy until the data transmission strategy is updated by the next transmission of the reference signal, which may cause the current data transmission strategy to fail to match the radio channel state during data transmission, affecting the performance of the communication system.

To enable the data transmission strategy to match the radio channel state during data transmission, in some technologies, the manner of acquiring the channel state information is that: a terminal measures a limited number of reference signals; the terminal predicts channel state information for one or more future times in a manner based on the measurement of the limited number of reference signals; and the terminal feeds back the predicted channel state information for the one or more future times to the base station, which may save the overhead for the terminal to report the channel state information, and reduce the occurrence of situations where the current data transmission strategy fails to match the radio channel state during data transmission due to the latency caused by reporting the channel state information or the time interval of reporting channel state information.

However, if the predicted channel state information is inaccurate, it will affect the performance of the communication system. The accuracy of the predicted channel state information being monitored by the terminal may ensure the accuracy of the predicted channel state information. For example, if the terminal monitors that the predicted channel state information is inaccurate, certain measures may be taken, such as switching the manner of predicting the channel state information, or adjusting parameters used in the manner of predicting channel state information, to ensure the accuracy of the predicted channel state information.

In some technologies, the monitoring manner for the terminal to monitor the predicted channel state information is that: the base station periodically sends reference signals; the terminal measures the reference signals at the predicted time points to implement monitoring of the predicted channel state information. However, in this monitoring manner, the base station periodically sends the reference signals, resulting in an increased resource overhead for reference signals and a reduced performance of the communication system. Therefore, how to reduce the resource overhead required for monitoring channel state information is a technical problem that needs to be solved urgently.

Based on this, the embodiments of the present disclosure provide a communication method and apparatus, and a storage medium. In a case where a base station requires a terminal to monitor predicted channel state information, or requires the terminal not to monitor or to cease monitoring the predicted channel state information, the base station instructs the terminal whether to monitor the channel state information included in a channel state information report. Compared with some technologies in which the base station periodically sends reference signals to enable the terminal to monitor the predicted channel state information, the resource overhead required for monitoring channel state information is reduced, the accuracy of the acquired channel state information is ensured, and the performance of the communication system is improved.

It should be noted that, the reference signal sent from the base station to the terminal may be a downlink reference signal. In a long term evolution (LTE) system, a downlink reference signal used for the channel state information report includes a cell-specific reference signal (CRS) and a channel state information reference signal (CSI-RS); in a new radio (New Radio, NR) system, a downlink reference signal used for the channel state information report includes the CSI-RS. The CSI-RS is carried by a channel state information reference signal resource (CSI-RS Resource); the channel state information reference signal resource consists of code division multiplexing (CDM) groups; a CDM group is composed of radio resource elements; and the CSI-RS of a group of CSI-RS ports is multiplexed on the CSI-RS port through a code division multiplexing manner.

In an LTE wireless technology of the 4th generation mobile communication technology (4G), or an NR wireless technology of the 5th generation mobile communication technology (5G), the reference signal is classified into a periodic reference signal, a semi-persistent reference signal, and an aperiodic reference signal according to a transmission manner of the reference signal. The base station configures a reference signal resource (RS resource), and transmits the reference signal on the reference signal resource. The base station configures reference signal resources in multiple levels. One level is a reference signal scenario (RS setting), which includes at least one reference signal resource set. Another level is a reference signal resource set (RS resource set), which includes at least one reference signal resource. Yet another level is a reference signal resource, which specified orthogonal frequency division multiplexing (OFDM) symbols and frequency domain locations used for reference signal transmission. For periodic reference signals, the base station configures a period and a slot offset for the reference signal resource, and then transmits the reference signal on the reference signal resource at the configured time. For semi-persistent reference signals, the base station configures a period and a slot offset for the reference signal resource; when a reference signal is required to be transmitted, the base station first activates the reference signal resource set by using a media access control (MAC) signaling, and then transmits the reference signal resource on the reference signal resource set at the configured time. When the transmission of the reference signal is required to be ceased, the base station deactivates the reference signal resource set by using the MAC signaling. For a non-periodic reference signal, when the reference signal is required to be transmitted, the base station uses a downlink control information format (DCI Format) signaling to trigger the reference signal resource set, and then transmits the reference signal on the reference signal resource corresponding to the reference signal resource set. The terminal receives the configuration about the reference signal from the base station and receives the reference signal according to the configuration about the reference signal.

The solutions in the embodiments of the present disclosure will be introduced below in conjunction with the drawings.

The technical solutions provided in the embodiments of the present disclosure may be applied to various mobile communication networks, for example, NR mobile communication networks using the 5G, future mobile communication networks (e.g., 6G wireless communication system) or multiple communication fusion systems, etc., which are not limited to the embodiments of the present disclosure.

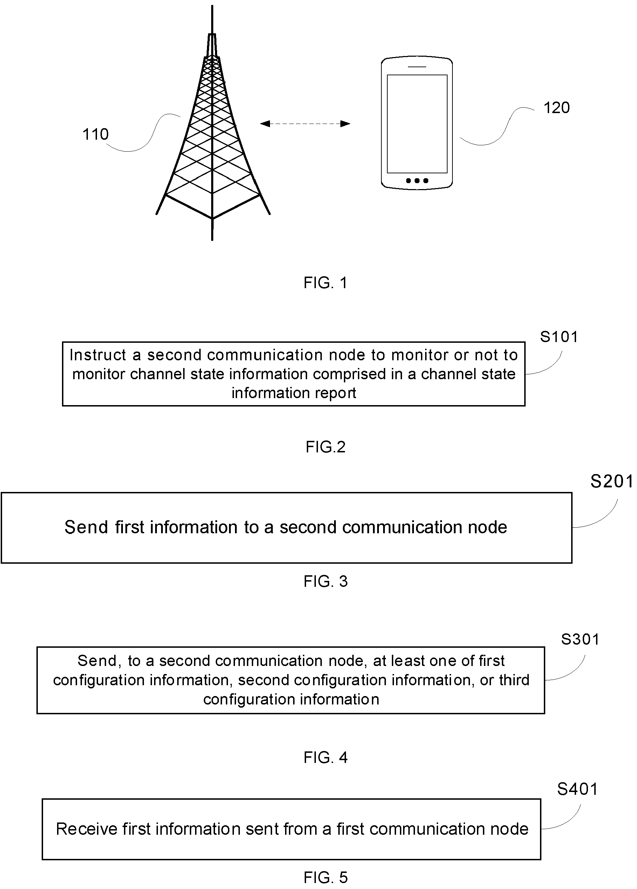

FIG. 1 is a schematic structural diagram of a communication system, provided by the embodiments of the present disclosure. As shown in FIG. 1, the communication system includes, but is not limited to, a first communication node 110 and a second communication node 120. The sending, reception, and related interactions, etc., of the wireless signal may be performed between the first communication node 110 and the second communication node 120.

In a wireless communication scenario, the first communication node 110 and the second communication node 120 communicate via a radio channel. For example, the first communication node 110 is a base station, the second communication node 120 is a terminal, and the base station and the terminal communicate via a radio channel. As another example, the first communication node 110 is a terminal, the second communication node 120 is a wireless router, and the wireless router and the terminal communicate via a radio channel. As another example, the first communication node 110 is a first base station, the second communication node 120 is a second base station, and the first base station and the second base station communicate via a radio channel. As another example, the first communication node 110 is a first terminal, the second communication node 120 is a second terminal, and the first terminal and the second terminal communicate via a radio channel. As another example, the first communication node 110 is a repeater, the second communication node 120 is a base station, and the base station and the repeater communicate via a radio channel. As another example, the first communication node 110 is a terminal, the second communication node 120 is a repeater, and the repeater and the terminal communicate via a radio channel. As another example, the first communication node 110 is a first repeater, the second communication node 120 is a second repeater, and the first repeater and the second repeater communicate via a radio channel. As another example, the first communication node 110 is a base station, the second communication node 120 is a satellite, and the satellite and the base station communicate via a radio channel. As another example, the first communication node 110 is a satellite, the second communication node 120 is a base station, and the base station and the satellite communicate via a radio channel. As another example, the first communication node 110 is a terminal, the second communication node 120 is a satellite, and the satellite and the terminal communicate via a radio channel. As another example, the first communication node 110 is a satellite, the second communication node 120 is a terminal, and the terminal and the satellite communicate via a radio channel. As another example, the first communication node 110 is a ground device, the second communication node 120 is an aircraft, and the aircraft and the ground device communicate via a radio channel. As another example, the first communication node 110 is a first aircraft, the second communication node 120 is a second aircraft, and the first aircraft and the second aircraft communicate via a radio channel.

In the present disclosure, the expressions such as "first" communication node, "second" communication node, "first" manner, "second" manner, "first" method, "second" method, "first" matrix, "second" matrix, "first" part, and "second" part, etc., unless otherwise specified, are only used for descriptive distinction and do not represent a sequence or order.

In some embodiments, the above base station may be any one of an evolution base station (evolution nodeB, eNB), a next generation base station (generation nodeB, gNB), a receiving and transmitting point (transmission receive point, TRP), a transmission point (TP), and a certain type of other access node. According to a size of the provided service coverage area, the base station may be classified into a macro base station for providing a macro cell (Macro cell), a micro base station for providing a pico cell (Pico cell) and a femto base station for providing a femto cell (Femto cell). With the continuous evolution of wireless communication technologies, other names for future base stations may also be adopted.

The above terminal may be a device with a wireless transceiver function, such as a mobile phone, a tablet computer, a wearable device, a vehicle-mounted device, an augmented reality (AR)/virtual reality (VR) device, a notebook computer, an ultra-mobile personal computer (UMPC), a netbook, a personal digital assistant (PDA), etc. The embodiments of the present disclosure do not limit the type of terminals.

It should be understood that, FIG. 1 is an exemplary structural diagram, and a number of devices included in the communication system shown in FIG. 1 is not limited thereto, and for example, a number of first communication nodes and a number of second communication nodes are not limited thereto. Furthermore, in addition to the devices shown in FIG. 1, the communication system shown in FIG. 1 may also include other devices, which is not limited thereto.

Next, as shown in FIG. 2, the embodiments of the present disclosure provide a communication method, the method is applied to a first communication node, the first communication node may be the first communication node 110 shown in FIG. 1, and the method includes S101 as follows.

In S101, a second communication node is instructed whether to monitor channel state information included in a channel state information report.

In some embodiments, in a case where the first communication node requires the second communication node to monitor the channel state information included in the channel state information report, or requires the second communication node not to monitor or to cease monitoring the channel state information included in the channel state information report, the first communication node instructs the second communication node whether to monitor the channel state information included in the channel state information report. The second communication node may be the second communication node 120 shown in FIG. 1 above, and for example, the communication method provided by the embodiments of the present disclosure is explained exemplarily by taking an example in which the first communication node is a base station and the second communication node is a terminal below.

In some embodiments, the channel state information included in the channel state information report may refer to the channel state information obtained by the second communication node through prediction.

Based on the embodiments shown in FIG. 2, by instructing the terminal whether to monitor the channel state information included in the channel state information report, the base station may instruct the terminal to monitor the channel state information included in the channel state information report when the base station requires the terminal to monitor the channel state information included in the channel state information report, and may instruct the terminal not to monitor or to cease monitoring the channel state information included in the channel state information report when the base station does not require the terminal to monitor the channel state information included in the channel state information report. Compared with some technologies in which the base station periodically sends reference signals to enable the terminal to monitor the predicted channel state information, the computational overhead is saved, the resource overhead for transmitting reference signals required for monitoring channel state information is reduced, the accuracy of the acquired channel state information is ensured, and the performance of the communication system is improved.

In some embodiments, as shown in FIG. 3, the above S101 may include S201 as follows.

In S201, first information is sent to a second communication node. Correspondingly, the second communication node receives the first information sent from the first communication node.

In some embodiments, in a case where the first communication node requires the second communication node to monitor the channel state information included in the channel state information report, or requires the second communication node not to monitor or to cease monitoring the channel state information included in the channel state information report, the first communication node sends the first information to the second communication node. The first information is used to instruct the second communication node to feed back the channel state information report, and the first information is further used to instruct the second communication node whether to monitor the channel state information included in the channel state information report.

That is to say, the first communication node, when instructing the second communication node to feed back the channel state information report through the first information, may also instruct, through the first information, the second communication node whether to monitor the channel state information included in the channel state information report. Feeding back the channel state information report may also have other names, for example, transmitting the channel state information report.

As an example, the first communication node sending the first information to the second communication node may be that the first communication node sends a first signaling to the second communication node, where the first signaling carries the first information. The first information may be understood as a field in the first signaling, or a domain in the first signaling.

In some embodiments, the first signaling may be a DCI signaling.

It should be understood that, by sending the first signaling to the second communication node to instruct the second communication node whether to monitor the channel state information included in the channel state information report, the first communication node may instruct the terminal to monitor the channel state information included in the channel state information report when the first communication node requires the terminal to monitor the channel state information included in the channel state information report, and may instruct the terminal not to monitor or to cease monitoring the channel state information included in the channel state information report when the first communication node does not require the terminal to monitor the channel state information included in the channel state information report, thereby saving computational overhead and helping to reduce the resource overhead for transmitting reference signals required for monitoring channel state information.

In some embodiments, the first information is further used to instruct the second communication node whether to monitor the channel state information included in the channel state information report, which is related to a value of the first information.

For example, in a case where the first information takes a first value, the first information is further used to instruct the second communication node to monitor the channel state information included in the channel state information report. For another example, in a case where the first information takes a second value, the first information is further used to instruct the second communication node not to monitor the channel state information included in the channel state information report. It should be understood that, not monitoring the channel state information included in the channel state information report includes ceasing monitoring the channel state information included in the channel state information report. The first value and the second value may be determined based on a bit contained in the first information, and the first value is different from the second value.

In some embodiments, the first information is used to instruct the second communication node to feed back the channel state information report, and the first information is further used to instruct the second communication node whether to monitor the channel state information included in the channel state information report, which is related to the value of the first information.

For example, the first information includes the first value; in a case where the first information takes the first value, the first information is used to instruct the second communication node to feed back the channel state information report, and the first information is further used to instruct the second communication node not to monitor the channel state information included in the channel state information report.

For another example, the first information includes the first value and the second value; in a case where the first information takes the first value, the first information is used to instruct the second communication node to feed back the channel state information report, and the first information is further used to instruct the second communication node not to monitor the channel state information included in the channel state information report. In a case where the first information takes the second value, the first information is used to instruct the second communication node to feed back the channel state information report, and the first information is further used to instruct the second communication node to monitor the channel state information included in the channel state information report.

For another example, the channel state information report includes a channel state information report A and a channel state information report B, and the first information includes a first value, a second value, a third value, and a fourth value. In a case where the first information takes the first value, the first information is used to instruct the second communication node to feed back the channel state information report A, and the first information is further used to instruct the second communication node not to monitor the channel state information A included in the channel state information report. In a case where the first information takes the second value, the first information is used to instruct the second communication node to feed back the channel state information report A, and the first information is further used to instruct the second communication node to monitor the channel state information A included in the channel state information report. In a case where the first information takes the third value, the first information is used to instruct the second communication node to feed back the channel state information report B, and the first information is further used to instruct the second communication node not to monitor the channel state information B included in the channel state information report. In a case where the first information takes the fourth value, the first information is used to instruct the second communication node to feed back the channel state information report B, and the first information is further used to instruct the second communication node to monitor the channel state information B included in the channel state information report.

It should be understood that, using a same field (domain) on the same signaling or a same value on the same field to instruct the second communication node to feed back the channel state information report and to instruct the second communication node whether to monitor the channel state information included in the channel state information report may reduce overhead of the signaling and reduce complexity of the signaling.

In some embodiments, the first communication node may also use different fields in the first signaling to instruct the second communication node to perform different functions or to perform operations related to different functions. For example, the first communication node uses a first field of the first signaling to notify the second communication node about scheduling information for data transmission, and uses a second field of the first signaling to notify transmission of the channel state information report. Using the second field of the first signaling to notify transmission of the channel state information report includes that different channel state information reports are triggered by different values of the second field of the first signaling.

In some embodiments, as shown in FIG. 4, before S101, the method may further include S301 as follows.

In S301, at least one of first configuration information, second configuration information, or third configuration information is sent to the second communication node. Correspondingly, the second communication node receives at least one of the first configuration information, the second configuration information, or the third configuration information sent from the first communication node.

In some embodiments, in a case where the first communication node requires to determine a data transmission strategy that has an appropriate transmission effect with the second communication node, the first communication node configures the first configuration information, the second configuration information, and the third configuration information, and sends at least one of the first configuration information, the second configuration information, or the third configuration information to the second communication node.

The first configuration information includes a first reference signal resource set, the first reference signal resource set includes at least one reference signal resource, and the first configuration information is used to indicate the first reference signal resource set associated with the channel state information report.

The second configuration information is used to indicate the channel state information required to be included in the channel state information report; exemplarily, the channel state information to be included may include at least one of: a precoding matrix or a precoding matrix indicator, channel quality or a channel quality indicator, reference signal received power, a signal to interference plus noise ratio, a channel coefficient, a rank of a precoding matrix, etc., for an antenna. "Requiring to be included" may also have other names, for example, "needing to be included," "requiring to be configured," "shall be included," "shall be configured," etc.

The third configuration information is used to indicate that the channel state information report is determined based on the first reference signal resource set, and the third configuration information may also be understood as being used to indicate a matching relationship between the channel state information report and the first reference signal resource set. It should be understood that, there may be a plurality of channel state information reports and a plurality of reference signal resource sets within a communication system, and the third configuration information indicates the matching relationship between the channel state information report and the reference signal resource set, so that the second communication node may determine, based on the third configuration information, which reference signal resource set to use for determining the channel state information report. For example, a reference signal resource set 1, a reference signal resource set 2, and a reference signal resource set 3 are configured in the communication system; and a channel state information report A, a channel state information report B, and a channel state information report C are configured in the communication system; the third configuration information is used to indicate that the channel state information report A is determined based on a reference signal resource within the reference signal resource set 1, or to indicate that the channel state information report A is determined based on a reference signal resource within the reference signal resource set 2. Then, the second communication node, based on the third configuration information, may determine that the channel state information report A is determined based on the reference signal resource within the reference signal resource set 1, or determine that the channel state information report A is determined based on the reference signal resource within the reference signal resource set 2.

In some embodiments, the first reference signal resource set includes a first group of reference signal resources and a second group of reference signal resources, and a grouping manner of reference signal resources included in the first reference signal resource set is related to a transmission time of reference signal resources included in the first reference signal resource set.

In some embodiments, the first group of reference signal resources is located before the second group of reference signal resources in time domain.

For example, the reference signal resources included in the first reference signal resource set may be sorted according to a sequential order of transmission time; then, based on the sorted order, a first half of the reference signal resources that are arranged in order in the time domain are used as the first group of reference signal resources, and the remaining half are used as the second group of reference signal resources.

For another example, the first communication node indicates a target reference signal resource in the first reference signal resource set, and may use the reference signal resources located before the target reference signal resource as the first group of reference signal resources, and may use the reference signal resources located after the target reference signal resource as the second group of reference signal resources.

In some embodiments, the first information is further used to indicate that the channel state information report is determined based on the first group of reference signal resources, or the channel state information report is determined based on the first group of reference signal resources and the second group of reference signal resources. That is to say, the first information is further used to indicate that the channel state information report is determined based on a part of reference signal resources in the first reference signal resource set, or based on all reference signal resources in the first reference signal resource set.

It should be understood that, in a case where the first instruction information is further used to indicate that the channel state information report is determined based on the first group of reference signal resources, on the one hand, reference signal resources occupied by the reference signal may be saved, and computational overhead may be saved; on the other hand, the second group of reference signal resources may possibly be used to monitor the channel state information, so that the reference signal resources according to which the channel state information included in the channel state information report is monitored are different from the reference signal resources according to which the channel state information included in the channel state information report is determined, thereby adding extra reference signal resources for monitoring the channel state information, or avoiding adding extra reference signal resource overhead occupied by the reference signal for monitoring the channel state information.

In some embodiments, the first information indicates that the channel state information report is determined based on the first group of reference signal resources, or the channel state information report is determined based on the first group of reference signal resources and the second group of reference signal resources, which is related to the value of the first information.

In combination with the above description that the first information is used to instruct the second communication node to feed back the channel state information report, and the first information is further used to instruct the second communication node whether to monitor the channel state information included in the channel state information report.

For example, in a case where the first information takes the first value, the first information is used to instruct to feed back the channel state information report, the first information is further used to instruct the second communication node not to monitor the channel state information included in the channel state information report, and the first information is further used to indicate that the channel state information report is determined based on the first group of reference signal resources. In this way, the second group of reference signal resources occupied by the reference signal for determining the channel state information report may be saved.

For another example, in a case where the first information takes the second value, the first information is used to instruct to feed back the channel state information report, the first information is further used to instruct the second communication node to monitor the channel state information included in the channel state information report, and the first information is further used to indicate that the channel state information report is determined based on the first group of reference signal resources. In this way, the channel state information report may be determined based on the first group of reference signal resources, and the channel state information may be monitored based on the second group of reference signal resources, thereby saving reference signal resources other than the first reference signal resource set that the reference signal occupies for monitoring the channel state information.

For another example, in a case where the first information takes the third value, the first information is used to instruct to feed back the channel state information report, the first information is further used to instruct the second communication node not to monitor the channel state information included in the channel state information report, and the first information is further used to indicate that the channel state information report is determined based on the first group of reference signal resources and the second group of reference signal resources.

For another example, in a case where the first information takes the fourth value, the first information is used to instruct to feed back the channel state information report, the first information is further used to instruct the second communication node to monitor the channel state information included in the channel state information report, and the first information is further used to indicate that the channel state information report is determined based on the first group of reference signal resources and the second group of reference signal resources.

It should be understood that, instructing the second communication node to feed back the channel state information report, and indicating that the channel state information report is determined based on the first group of reference signal resources or based on the first group of reference signal resources and the second group of reference signal resources, by using the same field on the first signaling or by using the same value on the same field on the first signaling, may reduce the signaling overhead and may reduce the complexity of signaling.

In some embodiments, the first information is further used to indicate whether the reference signal is transmitted on the second group of reference signal resources. It should be understood that, the first information is further used to indicate whether the reference signal is transmitted on the second group of reference signal resources, so as to facilitate the second communication node to determine, based on the first information, whether to receive the reference signal on the second group of reference signal resources.

It should be noted that, currently, the reference signal is transmitted on the first group of reference signal resources, and according to stationarity of a channel in the time domain, sometimes the reference signal requires to be transmitted on the second group of reference signal resources, and sometimes the reference signal does not require to be transmitted on the second group of reference signal resources. For example, when the channel is non-stationary in the time domain, the reference signal requires to be transmitted on the second group of reference signal resources, to determine the channel state information; when the channel is stationary in the time domain, the channel state information may be determined without requiring the reference signal to be transmitted on the second group of reference signal resources.

According to whether the channel state information is monitored, sometimes the reference signal requires to be transmitted on the second group of reference signal resources, and sometimes the reference signal does not require to be transmitted on the second group of reference signal resources. For example, when the channel state information requires to be monitored, the channel state information may be monitored according to the reference signal transmitted on the second group of reference signal resources; when the channel state information does not require to be monitored, it is not necessary to require the reference signal to be transmitted on the second group of reference signal resources. By indicating whether the reference signal is transmitted on the second group of reference signal resources through the first information, overhead of the reference signal occupying the second group of reference signal resources may be reduced in a case of satisfying requirements.

As an example, based on the above description, the first information being further used to instruct the second communication node whether to monitor the channel state information included in the channel state information report may be that the second communication node is instructed whether to monitor the channel state information included in the channel state information report according to an instruction of whether the reference signal is transmitted on the second group of reference signal resources.

For example, in a case where the first information is used to indicate that the reference signal is transmitted on the second group of reference signal resources, it is determined that the second communication node monitors the channel state information included in the channel state information report. For another example, in a case where the first information is used to indicate that the reference signal is not transmitted on the second group of reference signal resources, it is determined that the second communication node does not monitor the channel state information included in the channel state information report.

As another example, the first information being further used to indicate whether the reference signal is transmitted on the second group of reference signal resources may be indicating whether the reference signal is transmitted on the second group of reference signal resources according to the second communication node being instructed whether to monitor the channel state information included in the channel state information report.

For example, in a case where the first information is used to instruct the second communication node to monitor the channel state information included in the channel state information report, it is determined that the reference signal is transmitted on the second group of reference signal resources. For another example, in a case where the first indication information is used to instruct the second communication node not to monitor the channel state information included in the channel state information report, it is determined that the reference signal is not transmitted on the second group of reference signal resources.

In some embodiments, the first information being further used to indicate whether the reference signal is transmitted on the second group of reference signal resources is related to the value of the first information.

In combination with the above description that the first information is used to instruct to feed back the channel state information report, and the first information is further used to instruct the second communication node whether to monitor the channel state information included in the channel state information report, for example, in a case where the first information takes the first value, the first information is used to instruct to feed back the channel state information report, the first information is further used to instruct the second communication node not to monitor the channel state information included in the channel state information report, and the first information is further used to indicate that the reference signal is transmitted on the second group of reference signal resources.

For another example, in a case where the first information takes the second value, the first information is used to instruct to feed back the channel state information report, the first information is further used to instruct the second communication node to monitor the channel state information included in the channel state information report, and the first information is further used to indicate that the reference signal is transmitted on the second group of reference signal resources.

For another example, in a case where the first information takes the third value, the first information is used to instruct to feed back the channel state information report, the first information is further used to instruct the second communication node not to monitor the channel state information included in the channel state information report, and the first information is further used to indicate that the reference signal is not transmitted on the second group of reference signal resources.

For another example, in a case where the first information takes the fourth value, the first information is used to instruct to feed back the channel state information report, the first information is further used to instruct the second communication node to monitor the channel state information included in the channel state information report, and the first information is further used to indicate that the reference signal is not transmitted on the second group of reference signal resources.

In some embodiments, the first information is further used to indicate a transmission time of the channel state information report.

It should be understood that, the first information is further used to indicate the transmission time included in the channel state information, so as to facilitate the second communication node to determine time for feeding back the channel state information based on the first information.

In some embodiments, the transmission time of the channel state information report is related to a determining manner of the channel state information report.

As an example, in a case where the channel state information report is determined based on the first group of reference signal resources, the transmission time of the channel state information report is determined based on a time at which a last reference signal resource of the first group of reference signal resources in time domain is located. For example, the transmission time of the channel state information report may be located after the time at which the last reference signal resource of the first group of reference signal resources in the time domain is located, in this way, conditions are created for advancing the transmission time of the channel state information report to a time at which the second group of reference signal resources are located, so that it is possible for the transmission time of the channel state information report to be located before the time at which the second group of reference signal resources are located, that is, the channel state information report is transmitted before the time at which the second group of reference signal resources are located.

As another example, in a case where the channel state information report is determined based on the first group of reference signal resources and the second group of reference signal resources, the transmission time of the channel state information report is determined based on a time at which a last reference signal resource of the first group of reference signal resources and the second group of reference signal resources in time domain is located. For example, the transmission time of the channel state information report is after a time at which a last reference signal resource of the first group of reference signal resources and the second group of reference signal resources in the time domain is located.

It should be understood that, the first information is further used to indicate the transmission time of the channel state information report, that is, the transmission time of the channel state information report is determined based on the first information, so that the transmission time of the channel state information report is before a time at which a last reference signal resource of the first reference signal resource set in time domain is located.

The above embodiments are described by taking an example in which the first configuration information includes the first reference signal resource set, and in some embodiments, the first configuration information further includes a second reference signal resource set. Reference signal antenna ports with a same index number in the second reference signal resource set and the first reference signal resource set may be understood as the same ports.

It should be understood that, the reference signal is transmitted by a reference signal antenna port and carried by a reference signal resource. The reference signal carried on different reference signal resources and transmitted by reference signal antenna ports with the same index number may be understood as reference signals transmitted by the same reference signal antenna port.

In some embodiments, the second reference signal resource set is used by the second communication node to monitor channel state information included in the channel state information report based on the second reference signal resource set.

In some embodiments, the first information is further used to indicate whether the reference signal is transmitted on the second reference signal resource set.

It should be understood that, the first information is further used to indicate whether the reference signal is transmitted on the second reference signal resource set, so that the second communication node determines whether to receive the reference signal on the second reference signal resource set based on the first information. For example, in a case where the first information indicates that the reference signal is transmitted on the second reference signal resource set, the second communication node determines to receive the reference signal on the second reference signal resource set based on the first information. In a case where the first information indicates that the reference signal is not transmitted on the second reference signal resource set, the second communication node determines not to receive the reference signal on the second reference signal resource set based on the first information, which helps to reduce overhead of the second communication node.

In some embodiments, the first information indicating whether the reference signal is transmitted on the second reference signal resource set is related to a value of the first information. For example, in a case where the first information takes a first value, the first information is further used to indicate that the reference signal is transmitted on the second reference signal resource set. For another example, in a case where the first information takes a second value, the first information is further used to indicate that the reference signal is not transmitted on the second reference signal resource set.

In some embodiments, the first information indicating whether the reference signal is transmitted on the second reference signal resource may be: indicating whether the reference signal is transmitted on the second reference signal resource set according to the second communication node being instructed to feed back the channel state information report. For example, in a case where the first information is used to instruct the second communication node to feed back the channel state information report, it is determined that the reference signal is transmitted on the second reference signal resource.

Exemplarily, in combination with the above, whether the reference signal is transmitted on the second reference signal resource set is indicated according to the second communication node being instructed to feed back the channel state information report, the first information indicating whether the reference signal is transmitted on the second reference signal resource set is related to the value of the first information. For example, in a case where the first information takes the first value, the first information is used to instruct the second communication node to feed back the channel state information report, and the first information is further used to indicate that the reference signal is transmitted on the second reference signal resource set. For another example, in a case where the first information takes the second value, the first information is used to instruct the second communication node to feed back the channel state information report, and the first information is further used to indicate that the reference signal is not transmitted on the second reference signal resource set.

In some embodiments, the first information indicating whether the reference signal is transmitted on the second reference signal resource may be: indicating whether the reference signal is transmitted on the second reference signal resource according to the second communication node be instructed whether to monitor the channel state information included in the channel state information report. For example, in a case where the first information is further used to instruct the second communication node to monitor channel state information included in the channel state information report, it is determined that the reference signal is transmitted on the second reference signal resource set. For another example, in a case where the first information is further used to instruct the second communication node not to monitor the channel state information included in the channel state information report, it is determined that the reference signal is not transmitted on the second reference signal resource set, thereby saving the overhead of the signaling.

Exemplarily, in combination with the above, whether the reference signal is transmitted on the second reference signal resource set is indicated according to the second communication node being instructed whether to monitor the channel state information included in the channel state information report, the first information indicating whether the reference signal is transmitted on the second reference signal resource set is related to the value of the first information. For example, in a case where the first information takes the first value, the first information is further used to instruct the second communication node to monitor the channel state information included in the channel state information report, and the first information is further used to indicate that the reference signal is transmitted on the second reference signal resource set. For another example, in a case where the first information takes the second value, the first information is further used to instruct the second communication node not to monitor the channel state information included in the channel state information report, and the first information is further used to indicate that the reference signal is not transmitted on the second reference signal resource set.

In some embodiments, the first information instructing the second communication node whether to monitor the channel state information included in the channel state information report may be: instructing the second communication node whether to monitor the channel state information included in the channel state information report according to the indication of whether the reference signal is transmitted on the second reference signal resource set. For example, in a case where the first information is further used to indicate that the reference signal is transmitted on the second reference signal resource set, it is determined that the second communication node monitors the channel state information included in the channel state information report. For another example, in a case where the first information is further used to indicate that the reference signal is not transmitted on the second reference signal resource, it is determined that the second communication node does not monitor the channel state information included in the channel state information report, thereby saving the overhead of the signaling.

Exemplarily, in combination with the above, the second communication node is instructed whether to monitor the channel state information included in the channel state information report according to an indication of whether the reference signal is transmitted on the second reference signal resource set, the first information indicating whether the reference signal is transmitted on the second reference signal resource set is related to the value of the first information. For example, in a case where the first information takes the first value, the first information is further used to indicate that the reference signal is transmitted on the second reference signal resource set, and the first information is further used to instruct the second communication node to monitor the channel state information included in the channel state information report. For another example, in a case where the first information takes the second value, the first information is further used to indicate that the reference signal is not transmitted on the second reference signal resource set, and the first information is further used to instruct the second communication node not to monitor the channel state information included in the channel state information report.

It should be noted that, the above examples are only illustrative descriptions of the role of the first information, and do not constitute a limitation on the solutions of the disclosure and solutions obtained by rearranging and combining the roles of the first information should also fall within the protection scope of the solutions of the disclosure.

The above embodiments are explained by taking an example in which the first information has a function for instructing the second communication node to feed back the channel state information report, and the first information further has a function for instructing the second communication node whether to monitor the channel state information included in the channel state information report. In some embodiments, the first information may also have only the function of instructing the second communication node to feed back the channel state information report, and when the first communication node sends the first information to the second communication node, the first communication node may further send the second information to the second communication node, where the second information is used to instruct the second communication node whether to monitor the channel state information included in the channel state information report, the second information may be carried in a first signaling, may also be carried in a second signaling, and the second signaling is different from the first signaling. That is, the first communication node may also use two different pieces of information, or two different pieces of signaling, to instruct the second communication node to feed back the channel state information report and instruct the second communication node whether to monitor the channel state information included in the channel state information report, respectively.

It should be understood that, in a case where the second information is also carried in the first signaling, and the second information may be understood as another field (domain) in the first signaling that is different from a field (domain) where the first information is located.

In some embodiments, the second signaling is a DCI signaling.

In some embodiments, after the first communication node sends the first information to the second communication node, that is, after S201, the first communication node may receive the channel state information report sent from the second communication node, the channel state information report includes channel state information required to be included in the channel state information report indicated by the second configuration information, and the first communication node may determine a data transmission strategy with an appropriate transmission effect between the first communication node and the second communication node based on the channel state information report.

In some embodiments, as shown in FIG. 5, the embodiments of the present disclosure provide a communication method, the method is applied to a second communication node, the second communication node may be the second communication node 120 shown in FIG. 1, and the method includes S401 as follows.

In S401, first information sent from a first communication node is received.

In some embodiments, in a case where the first communication node requires the second communication node to monitor the channel state information included in the channel state information report, or requires the second communication node not to monitor or to cease monitoring the channel state information included in the channel state information report, the first communication node sends the first information to the second communication node. Correspondingly, the second communication node receives the first information sent from the first communication node. The first information is used to instruct the second communication node to feed back the channel state information report, and the first information is further used to instruct the second communication node whether to monitor the channel state information included in the channel state information report.

For the description of the first information, reference may be made to the corresponding description of the first information in the above S201, which will not be repeated herein.

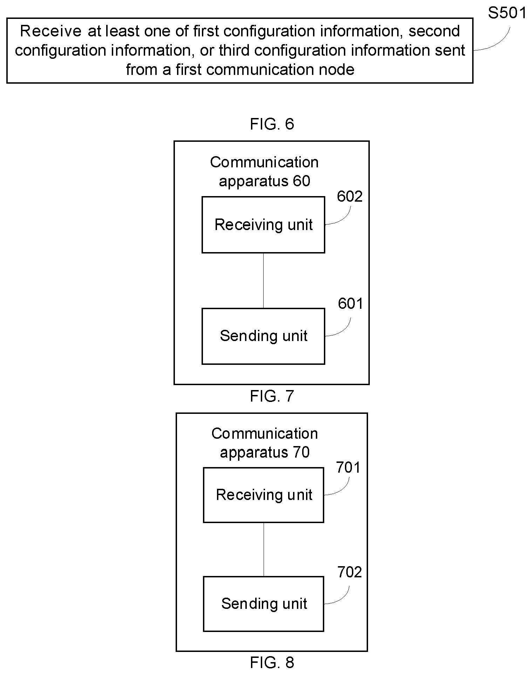

In some embodiments, before the second communication node receives the first information sent from the first communication node, that is, before the above S401, as shown in FIG. 6, the method further includes S501 as follows.

In S501, at least one of first configuration information, second configuration information, or third configuration information sent from the first communication node is received.

For descriptions of the first configuration information, the second configuration information, and the third configuration information, reference may be made to the corresponding descriptions in the above S301, which will not be repeated herein.

In some embodiments, after the second communication node receives the first information, that is, after S401, the second communication node may obtain the channel state information report based on at least one of the first configuration information, the second configuration information, and the third configuration information, and the first information. The second communication node, after obtaining the channel state information report, may send the channel information report to the first communication node, so that the first communication node determines a data transmission strategy with an appropriate transmission effect between the first communication node and the second communication node based on the channel state information report.

The above introduces the solutions provided by the present disclosure mainly from the perspective of interaction between various nodes. It may be understood that, in order to implement the above functions, the various nodes, for example, the first communication node or the second communication node, contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

FIG. 7 illustrates a schematic diagram of components of a communication apparatus, provided in the embodiments of the present disclosure. As shown in FIG. 7, the communication apparatus 60 includes a sending unit 601. In some embodiments, the communication apparatus 60 further includes a receiving unit 602.

The communication apparatus 60 may be the above-mentioned first communication node or a chip in the first communication node. When the communication apparatus 60 is configured to implement the functions of the first communication node in the above embodiments, the respective units are configured to implement the following functions.

The sending unit 601, is configured to instruct a second communication node whether to monitor channel state information included in a channel state information report.

In some embodiments, the sending unit 601, is configured to send first information to the second communication node, wherein the first information is used to instruct the second communication node to feed back the channel state information report, and the first information is further used to instruct the second communication node whether to monitor the channel state information included in the channel state information report.

In some embodiments, the first information being further used to instruct the second communication node whether to monitor the channel state information included in the channel state information report is related to a value of the first information.

In some embodiments, in a case where the first information takes a first value, the first information is further used to instruct the second communication node to monitor the channel state information included in the channel state information report.

In some embodiments, in a case where the first information takes a second value, the first information is further used to instruct the second communication node not to monitor the channel state information included in the channel state information report.

In some embodiments, the sending unit 601 is further configured to send at least one of first configuration information, second configuration information, or third configuration information to the second communication node; and where the first configuration information includes a first reference signal resource set, the second configuration information is used to indicate channel state information required to be included in the channel state information, and the third configuration information is used to indicate that the channel state information report is determined based on the first reference signal resource set.

In some embodiments, the first reference signal resource set includes a first group of reference signal resources and a second group of reference signal resources, and a grouping manner of reference signal resources included in the first reference signal resource set is related to a transmission time of reference signal resources included in the first reference signal resource set.

In some embodiments, the first group of reference signal resources is located before the second group of reference signal resources in time domain.

In some embodiments, the first information is further used to indicate that the channel state information report is determined based on the first group of reference signal resources, or the channel state information report is determined based on the first group of reference signal resources and the second group of reference signal resources.

In some embodiments, the first information is further used to indicate whether a reference signal is transmitted on the second group of reference signal resources.

In some embodiments, the first information being further used to instruct the second communication node whether to monitor the channel state information included in the channel state information report includes: instructing the second communication node whether to monitor the channel state information included in the channel state information report according to an indication of whether a reference signal is transmitted on the second group of reference signal resources.

In some embodiments, in a case of indicating that the reference signal is transmitted on the second group of reference signal resources, it is determined that the second communication node monitors the channel state information included in the channel state information report.

In some embodiments, the first information being further used to indicate whether the reference signal is transmitted on the second group of reference signal resources includes: indicating whether the reference signal is transmitted on the second group of reference signal resources according to the second communication node being instructed whether to monitor the channel state information included in the channel state information report.

In some embodiments, in a case where the second communication node is instructed to monitor the channel state information included in the channel state information report, it is determined that the reference signal is transmitted on the second group of reference signal resources.

In some embodiments, the first information is further used to indicate a transmission time of the channel state information report, and the transmission time of the channel state information is related to a determining manner of the channel state information.

In some embodiments, in a case where the channel state information is determined based on the first group of reference signal resources, the transmission time of the channel state information report is determined based on a time at which a last reference signal resource of the first group of reference signal resources in time domain is located.

In some embodiments, in a case where the channel state information report is determined based on the first group of reference signal resources and the second group of reference signal resources, the transmission time of the channel state information report is determined based on a time at which a last reference signal resource of the first group of reference signal resources and the second group of reference signal resources in time domain is located.

In some embodiments, the first configuration information further includes a second reference signal resource set.

In some embodiments, the first information is further used to indicate whether a reference signal is transmitted on the second reference signal resource set.

In some embodiments, the first information being further used to indicate whether the reference signal is transmitted on the second reference signal resource set includes: indicating whether the reference signal is transmitted on the second reference signal resource set according to the second communication node being instructed to feed back the channel state information report.

In some embodiments, the first information being further used to indicate whether the reference signal is transmitted on the second reference signal resource set includes: indicating whether the reference signal is transmitted on the second reference signal resource set according to the second communication node being instructed whether to monitor the channel state information included in the channel state information report.

In some embodiments, in a case where the second communication node is instructed to monitor the channel state information included in the channel state information report, it is determined that the reference signal is transmitted on the second reference signal resource set.

In some embodiments, the first information being further used to instruct the second communication node whether to monitor the channel state information included in the channel state information report includes: instructing the second communication node whether to monitor the channel state information included in the channel state information report according to an indication of whether the reference signal is transmitted on the second reference signal resource set.

In some embodiments, in a case of indicating that the reference signal is transmitted on the second reference signal resource set, it is determined that the second communication node monitors the channel state information included in the channel state information report.

In some embodiments, the receiving unit 602, is configured to receive a channel state information report sent from a second communication node.

FIG. 8 illustrates a schematic diagram of components of another communication apparatus, provided in the embodiments of the present disclosure. As shown in FIG. 8, the communication apparatus 70 includes a receiving unit 701. In some embodiments, the communication apparatus 70 may further include a sending unit 702.

The communication apparatus 70 may be the above-mentioned second communication node or a chip in the second communication node. When the communication apparatus 70 is configured to implement the functions of the second communication node in the above embodiments, the respective units are configured to implement the following functions.

The receiving unit 701, is configured to receive first information sent from the first communication node, where the first information is used to instruct the second communication node to feed back a channel state information report, and the first information is further used to instruct the second communication node whether to monitor channel state information included in the channel state information report.

In some embodiments, the receiving unit 701, is further configured to receive first configuration information, second configuration information, and third configuration information sent from the first communication node; and where the first configuration information includes a first reference signal resource set, the second configuration information is used to indicate channel state information required to be included in the channel state information, and the third configuration information is used to indicate that the channel state information report is determined based on the first reference signal resource set.

In some embodiments, the sending unit 702, is configured to send the channel state information report to the first communication node.

It should be noted that, the units in FIG. 7 and FIG. 8 may also be referred to as modules, and for example, the sending unit may be referred to as a sending module. In addition, in the embodiments shown in FIG. 7 and FIG. 8, the names of the various units may not be the names shown in the figures, and for example, the sending unit may also be referred to as a communication unit, and the receiving unit may also be referred to as a communication unit.

If the respective units in FIG. 7 and FIG. 8 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

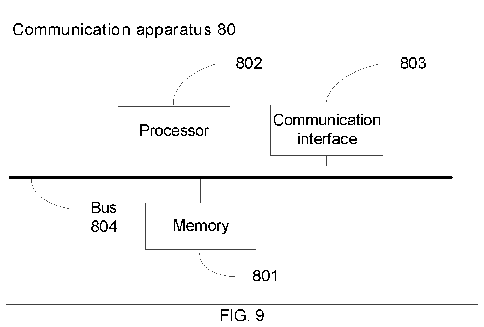

In a case where the above communication apparatus 60 and communication apparatus 70 implement the functions of the above integrated modules in the form of hardware, the embodiments of the present disclosure provide a structural schematic diagram of a communication apparatus. As shown in FIG. 9, the communication apparatus 80 includes a memory 801, a processor 802, a communication interface 803 and a bus 804.

The memory 801 may be, but not limited to, a read-only memory (ROM) or other types of static storage devices capable of storing static information and instructions, a random access memory (RAM) or other types of dynamic storage devices capable of storing dynamic information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 802 may implement or perform various exemplary logical blocks, modules and circuits described in conjunction with the content disclosed in the present disclosure. The processor 802 may be a central processing unit, a general-purpose processor, a digital signal processor, an application specific integrated circuit, a field programmable gate array or other programmable logic devices, a transistor logic device, a hardware component or any combination thereof. The processor 802 may implement or perform various exemplary logical blocks, modules and circuits described in conjunction with the content disclosed in the present disclosure. The processor 802 may also be a combination that implements computing functions, for example, including a combination of one or more microprocessors, a combination of a digital signal processor (DSP) and a microprocessor, or the like.

The communication interface 803 is configured to connect with other devices via a communication network. The communication network may be an Ethernet, a radio access network, a wireless local area network (WLAN), or the like.

In some embodiments, the memory 801 may be separated from the processor 802, and the memory 801 may be connected to the processor 802 via the bus 804 and is configured to store instructions or program codes. The processor 802, when calling and executing the instructions or program codes stored in the memory 801, is capable of implementing the communication method provided in the embodiments of the present disclosure.

In some embodiments, the memory 801 may also be integrated with the processor 802.

The bus 804 may be an extended industry standard architecture (EISA) bus, or the like. Buses 804 may be divided into address buses, data buses, control buses, and the like. For the convenience of representation, only one thick line is used in FIG. 9 for representation, but it does not mean that there is only one bus or one type of bus.

From the description of the above implementations, those skilled in the art can clearly understand that, for convenience and brevity of description, only the division of the above-mentioned various functional modules is illustrated by way of example, and in actual applications, the above-mentioned functions may be allocated to be completed by different functional modules as needed. That is, an internal structure of the base station or the terminal is divided into different functional modules to complete all or a part of the functions mentioned above.

The embodiments of the present disclosure further provide a computer readable storage medium. All or a part of the procedures in the method embodiments mentioned above may be completed by related hardware indicated by computer instructions, and the program may be stored in the computer readable storage medium mentioned above. The program, when executed, may include the procedures of the method embodiments mentioned above. The computer readable storage medium may be an internal storage unit of the first communication node or the second communication node of any one of the aforementioned embodiments, for example, a hard disk or a memory of a computer device. The above-mentioned computer readable storage medium may also be an external storage device of the above-mentioned first communication node or second communication node, such as a plug-in hard disk, a smart memory card (smart media card, SMC), a secure digital (SD) card, a flash card, etc., equipped on the above-mentioned first communication node or second communication node. Furthermore, the above-mentioned computer readable storage medium may also include both an internal storage unit and an external storage device of the above-mentioned first communication node or second communication node. The above-mentioned computer readable storage medium is used to store the above-mentioned computer program and other programs and data required for the above-mentioned first communication node or second communication node. The above-mentioned computer readable storage medium may also be used to temporarily store data that has been output or is to be output. The above-mentioned computer readable storage medium includes a non-transitory computer readable storage medium.

The embodiments of the present disclosure further provide a computer program product, the computer product contains a computer program, the computer program product, when executed on a computer, causes the computer to perform any one of the communication methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. A fact that some measures are documented in dependent claims different from each other does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Correspondingly, the specification and drawings herein are merely exemplary illustrations of the present disclosure as defined by the appended claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. A communication method, applied to a first communication node, **characterized in that** the method comprises:
instructing a second communication node whether to monitor channel state information contained in a channel state information report.

2. The method according to claim 1, wherein instructing the second communication node whether to monitor the channel state information contained in the channel state information report comprises:
sending first information to the second communication node, wherein the first information is used to instruct the second communication node to feed back the channel state information report, and the first information is further used to instruct the second communication node whether to monitor the channel state information contained in the channel state information report.

3. The method according to claim 2, wherein the first information instructing the second communication node whether to monitor the channel state information contained in the channel state information report is related to a value of the first information.

4. The method according to claim 3, wherein
in a case where the first information takes a first value, the first information is further used to instruct the second communication node to monitor the channel state information contained in the channel state information report.

5. The method according to claim 3, wherein
in a case where the first information takes a second value, the first information is further used to instruct the second communication node not to monitor the channel state information contained in the channel state information report.

6. The method according to claim 2, further comprising:
sending, to the second communication node, at least one of first configuration information, second configuration information, or third configuration information; and
wherein the first configuration information comprises a first reference signal resource set, the second configuration information is used to indicate channel state information required to be contained in the channel state information report, and the third configuration information is used to indicate that the channel state information report is determined based on the first reference signal resource set.

7. The method according to claim 6, wherein the first reference signal resource set comprises a first group of reference signal resources and a second group of reference signal resources, and a grouping manner of reference signal resources contained in the first reference signal resource set is related to a transmission time of reference signal resources contained in the first reference signal resource set.

8. The method according to claim 7, wherein the first group of reference signal resources is located before the second group of reference signal resources in time domain.

9. The method according to claim 7, wherein the first information is further used to indicate that the channel state information report is determined based on the first group of reference signal resources, or the channel state information report is determined based on the first group of reference signal resources and the second group of reference signal resources.

10. The method according to claim 7, wherein the first information is further used to indicate whether a reference signal is transmitted on the second group of reference signal resources.

11. The method according to claim 10, wherein the first information instructing the second communication node whether to monitor the channel state information contained in the channel state information report comprises:
instructing the second communication node whether to monitor the channel state information contained in the channel state information report according to an indication of whether the reference signal is transmitted on the second group of reference signal resources.

12. The method according to claim 11, wherein
in a case of indicating that the reference signal is transmitted on the second group of reference signal resources, determining that the second communication node monitors the channel state information contained in the channel state information report.

13. The method according to claim 10, wherein the first information indicating whether the reference signal is transmitted on the second group of reference signal resources comprises:
indicating whether the reference signal is transmitted on the second group of reference signal resources according to the second communication node being instructed whether to monitor the channel state information contained in the channel state information report.

14. The method according to claim 13, wherein
in a case where the second communication node is instructed to monitor the channel state information contained in the channel state information report, determining that the reference signal is transmitted on the second group of reference signal resources.

15. The method according to claim 9, wherein the first information is further used to indicate a transmission time of the channel state information report, and the transmission time of the channel state information report is related to a determining manner of the channel state information report.

16. The method according to claim 15, wherein
in a case where the channel state information report is determined based on the first group of reference signal resources, the transmission time of the channel state information report is determined based on a time at which a last reference signal resource of the first group of reference signal resources in time domain is located.

17. The method according to claim 15, wherein
in a case where the channel state information report is determined based on the first group of reference signal resources and the second group of reference signal resources, the transmission time of the channel state information report is determined based on a time at which a last reference signal resource of the first group of reference signal resources and the second group of reference signal resources in time domain is located.

18. The method according to claim 6, wherein the first configuration information further comprises a second reference signal resource set.

19. The method according to claim 18, wherein the first information is further used to indicate whether a reference signal is transmitted on the second reference signal resource set.

20. The method according to claim 19, wherein the first information indicating whether the reference signal is transmitted on the second reference signal resource set comprises:
indicating whether the reference signal is transmitted on the second reference signal resource set according to the second communication node being instructed to feed back the channel state information report.

21. The method according to claim 19, wherein the first information indicating whether the reference signal is transmitted on the second reference signal resource set comprises:
indicating whether the reference signal is transmitted on the second reference signal resource set according to the second communication node being instructed whether to monitor the channel state information contained in the channel state information report.

22. The method according to claim 21, wherein
in a case where the second communication node is instructed to monitor the channel state information contained in the channel state information report, determining that the reference signal is transmitted on the second reference signal resource set.

23. The method according to claim 19, wherein the first information instructing the second communication node whether to monitor the channel state information contained in the channel state information report comprises:
instructing the second communication node whether to monitor the channel state information contained in the channel state information report according to an indication of whether the reference signal is transmitted on the second reference signal resource set.

24. The method according to claim 23, wherein
in a case of indicating that the reference signal is transmitted on the second reference signal resource set, determining that the second communication node monitors the channel state information contained in the channel state information report.

25. A communication method, applied to a second communication node, **characterized in that** the method comprises:
receiving first information sent from a first communication node, wherein the first information is used to instruct the second communication node to feed back a channel state information report, and the first information is further used to instruct the second communication node whether to monitor channel state information contained in the channel state information report.

26. The method according to claim 25, further comprising:
receiving at least one of first configuration information, second configuration information, or third configuration information sent from the first communication node; and
wherein the first configuration information comprises a first reference signal resource set, the second configuration information is used to indicate channel state information required to be contained in the channel state information, and the third configuration information is used to indicate that the channel state information report is determined based on the first reference signal resource set.

27. A communication apparatus, **characterized by** comprising: a processor and a memory; wherein
the memory has stored instructions executable by the processor;
the processor is configured to execute the instructions, so that the communication apparatus implements the method according to any one of claims 1 to 26.

28. A computer readable storage medium, wherein the computer readable storage medium comprises computer instructions, and the computer instructions, upon being executed on a computer, enable the computer to perform the method according to any one of claims 1 to 26.
